# EUROPÄISCHE PATENTSCHRIFT

(11) **EP 0 538 574 B1**
(45) Veröffentlichungstag und Bekanntmachung des Hinweises auf die Patenterteilung: **20.09.1995**
(21) Anmeldenummer: 92113937.4
(22) Anmeldetag: 15.08.1992
(51) Int. Cl.: G21F 5/12, B23K 23/00

(54) **Abschirmtransport- und/oder Abschirmlagerbehälter und Verfahren zur Herstellung**
Shielded transport- and/or shielded storage cask and method of fabrication
Conteneur de transport blindé et/ou conteneur de stockage blindé et méthode de fabrication

(30) Priorität: 24.10.1991 DE 4135066
(43) Veröffentlichungstag der Anmeldung: 28.04.1993
(73) Patentinhaber: GNS GESELLSCHAFT FÜR NUKLEAR-SERVICE mbH, D-45130 Essen (DE)
(72) Erfinder: Diersch, Rudolf, Dr., W-4300 Essen 1 (DE); Janberg, Klaus, Dr., W-4030 Ratingen-Lintorf (DE); Methling, Dieter, Dipl.-Ing., W-4320 Hattingen (DE); Schröder, Karl, Dr., W-5905 Freudenberg (DE)
(74) Vertreter: Andrejewski, Walter

(56) Entgegenhaltungen:
- DE-A- 3 405 733
- FR-A- 2 515 407
- US-A- 3 234 603
- US-A- 4 666 659

## Beschreibung

Die Erfindung betrifft einen Abschirmtransport- und/oder Abschirmlagerbehälter für radioaktive Gegenstände und/oder Substanzen, insbesondere für bestrahlte Kernreaktorbrennelemente, mit Behältermantel, Behälterboden und den Behälterinnenraum abschließendem Deckelaggregat, wobei der Behältermantel als dickwandiges Bauteil aus Gußeisen, vom vorzugsweise aus Gußeisen mit Kugelgraphit, ausgeführt ist und deckelaggregatseitig eine Deckelaufnahme aufweist, in die zumindest der behälterinnenraumseitige Deckel des Deckelaggregates eingesetzt ist, und wobei die Deckelaufnahme in einem mit dem Behältermantel verbundenen Stahlring angeordnet ist. - Deckelaggregat bezeichnet im Rahmen der Erfindung eine Anordnung von zumindest zwei funktionell zusammenwirkenden Deckeln. Im allgemeinen ist der behälterinnenraumseitige Deckel als Abschirmdeckel entsprechender Dicke ausgeführt und aus Gußeisen gefertigt, ein nach außen hin angeschlossener Deckel ist zumeist als Kontrolldeckel ausgeführt und besteht aus Stahl. Ein zweiter Zusatzdeckel oder Schutzdeckel kann aufgesetzt sein. Ein solches Deckelaggregat erfüllt regelmäßig nicht lediglich eine Verschlußfunktion, sondern zusätzlich unter Bildung von Kontrollräumen auch Kontrollfunktionen, wobei z. B. Kontrollräume "abgefragt" werden können (vgl. z. B. DE-A-29 05 094, DE-A-30 10 493, DE-A-30 10 518, DE 30 25 795). Die Erfindung betrifft fernerhin Verfahren zur Herstellung solcher Abschirmtransport- und/oder Abschirmlagerbehälter.

Die aus der Praxis und z. B. aus den vorstehend zitierten Literaturstellen bekannten Abschirmtransport- und/oder Abschirmlagerbehälter haben sich bei vielfacher Erprobung und in vielfachem Einsatz bewährt, und zwar insbesondere in sicherheitstechnischer Hinsicht, in bezug auf die Abschirmfunktion, die Verschlußfunktion und die Kontrollfunktion. Die Herstellung ist jedoch verhältnismäßig aufwendig. Insbesondere ist die spanabhebende Bearbeitung der Deckelaufnahme mit ihren Paßflächen, Dichtflächen und Bohrungen im Rahmen der vorgegebenen Toleranzen bei entsprechender Oberflächenqualität der Paß- und Dichtflächen aufwendig. Aus fertigungstechnischen Gründen sind mit Rücksicht auf den Werkstoff Gußeisen zur Befestigung der Deckel des Deckelaggregates durch Verschraubung oder auf andere Weise aufwendige Auslegungen und/oder Maßnahmen erforderlich.

Bei einem Abschirmtransport- und/oder Abschirmlagerbehälter der eingangs beschriebenen Gattung (DE-A-3 142 646 die der FR-A-2 515 407 entspricht) ist der Stahlring formschlüssig mit dem Behältermantel verbunden. Zur Herstellung der Verbindung werden bekannte gießtechnische Maßnahmen eingesetzt. Auch das ist aufwendig.

Demgegenüber liegt der Erfindung die Aufgabe zugrunde, einen Abschirmtransport- und/oder Abschirmlagerbehälter anzugeben, der in sicherheitstechnischer Hinsicht und funktioneller Hinsicht langfristig allen Anforderungen genügt und einfacher als die bekannten Abschirmtransport- und/oder Abschirmlagerbehälter des eingangs beschriebenen Aufbaus hergestellt werden kann. Der Erfindung liegt fernerhin die Aufgabe zugrunde, Verfahren anzugeben, mit denen erfindungsgemäße Abschirmtransport- und/oder Abschirmlagerbehälter besonders einfach gefertigt werden können.

Zur Lösung dieser Aufgabe lehrt die Erfindung, ausgehend von dem eingangs beschriebenen Behälter, daß der Stahlring mit einer aluminothermischen Schweißverbindung an den Behältermantel angeschweißt und/oder in diesen eingeschweißt ist.

Aluminothermie bezeichnet Maßnahmen, die es erlauben, mittels exothermer Umsetzung zwischen Aluminium und Metalloxiden hohe Temperaturen zu verzeugen, die im Rahmen der Erfindung für die Herstellung der Schweißverbindung eingesetzt werden. Mischt man z. B. Eisenoxid, Chromoxid oder Manganoxid mit Aluminiumgrieß und entzündet man das Gemisch, so steigt die Temperatur auf hellste Weißglut und man erhält am Boden des Tiegels die geschmolzenen reinen Metalle und Schlacke. Zu den aluminothermischen Mischungen gehört insbesondere eine solche, die aus zwei Mol Aluminiumgrieß und einem Mol pulverisiertem, trockenen Eisenoxid besteht. Sie erhitzt sich nach Entzündung in wenigen Sekunden auf etwa 2.400°. Dabei entsteht nach der Gleichung 2Al + Fe₂O₃ = Al₂O₃ + 2Fe flüssiges Eisen, welches im Rahmen der Erfindung für die Herstellung der Schweißverbindung eingesetzt wird. Die Gestaltung der Schweißnaht kann in konstruktiver und geometrischer Hinsicht auf verschiedene Weise erfolgen. Insbesondere besteht die Möglichkeit, den Stahlring in eine Stahlringaufnahme des Behältermantels einzuschweißen.

Eine bevorzugte Ausführungsform der Erfindung, der in herstellungstechnischer Hinsicht, aber auch in sicherheitstechnischer Hinsicht, besondere Bedeutung zukommt, ist dadurch gekennzeichnet, daß der Stahlring auf eine obere Stirnfläche des Behältermantels aufgeschweißt ist. Aus Festigkeitsgründen empfiehlt es sich dabei, die Anordnung so zu treffen, daß der Stahlring in bezug auf Außenumfang, Innenumfang und Wanddicke dem Behältermantel angepaßt und mit einer flächigen Stumpfschweißverbindung an den Behältermantel angeschlossen ist.

Nach bevorzugter Ausführungsform der Erfindung ist bezüglich des Stahlringes die Anordnung so getroffen, daß die im Stahlring ausgeformte Deckelaufnahme für die Aufnahme eines behälterinnenraumseitigen Abschirmdeckels und eines zusätzlichen äußeren Kontrolldeckels eingerichtet ist. Der Kontrolldeckel ist vorzugsweise als Stahldeckel ausgeführt und mit dem Stahlring durch eine umlaufende Schweißnaht verbunden. Auf diese Weise kann die wichtige Abdichtung des Kontrolldeckels durch eine einfach herzustellende und allen Anforderungen genügende Schweißnaht verwirklicht werden.

Wie bereits erwähnt, besitzt der erfindungsgemäße Abschirmtransport- und/oder Abschirmlagerbehälter eine Schweißverbindung, die als aluminothermische Schweißverbindung hergestellt ist. Insoweit betrifft die Erfindung auch besondere Verfahren zur Herstellung eines solchen Abschirmtransport- und/oder Abschirmbehälters. Eine Ausführungsform ist dadurch gekennzeichnet, daß zunächst der Behältermantel aus dem Gußeisen hergestellt und die deckelaggregatsettige Stirnfläche für die Schweißung vorbereitet wird, daß der obere Rand des Behältermantels innenseitig von einem Kern und außenseitig von einem Formmantel umgeben wird, die den oberen Rand des Behältermantels überragen, daß auf die Stirnfläche des Behältermantels eine aluminothermische Mischung aufgebracht und diese gezündet wird, und daß unter Ausnutzung der exothermen freiwerdenden Wärmeenergie der aluminothermischen Umsetzung der Stahlring an den Behältermantel angeschlossen wird. Dabei kann ein vorgefertigter Stahlring eingesetzt werden. Es besteht aber auch die Möglichkeit, eine Stahlschmelze der Zusammensetzung des Stahlringes in den Zwischenraum zwischen Kern und Formmantel einzugießen.

Ein anderes Verfahren zur Herstellung eines erfindungsgemäßen Abschirmtransport- und/oder Abschirmlagerbehälters ist dadurch gekennzeichnet, daß zunächst der Stahlring hergestellt und in eine Gießform für den Behältermantel eingelegt wird, daß auf die behältermantelseitige Stirnfläche des Stahlringes eine aluminothermische Mischung aufgebracht wird und daß danach die Gußeisenschmelze für den Behältermantel und gegebenenfalls den Behälterboden eingegossen wird. Vorzugsweise wird hier mit einem Stahlring gearbeitet, der in bezug auf die Deckelaufnahme bereits bearbeitet ist.

Im folgenden wird die Erfindung anhand einer lediglich ein Ausführungsbeispiel darstellenden Zeichnung ausführlicher erläutert. Es zeigen in schematischer Darstellung
- Fig. 1: einen Vertikalschnitt durch einen erfindungsgemäßen Abschirmtransport- und/oder Abschirmlagerbehälter ausschnittsweise,
- Fig. 2: den stark vergrößerten Ausschnitt A aus dem Gegenstand der Fig. 1,
- Fig. 3: Maßnahmen zur Erläuterung eines erfindungsgemäßen Verfahrens zur Herstellung eines erfindungsgemäßen Abschirmtransport- und/oder Abschirmlagerbehälters,
- Fig. 4: entsprechend der Fig. 3 das Schema eines anderen Herstellungsverfahrens.

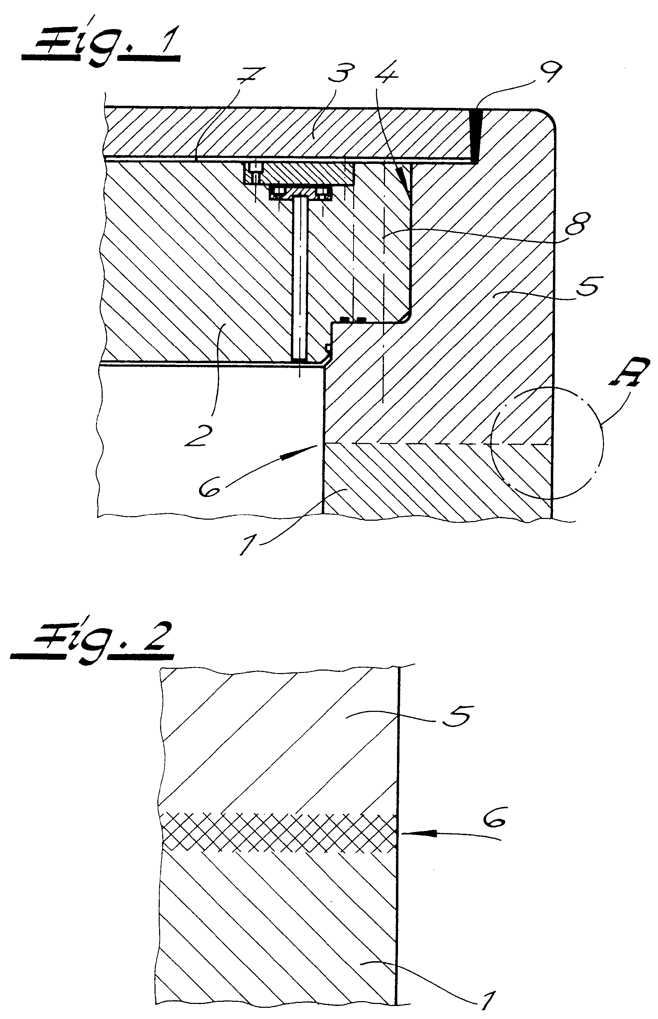

Der in den Fig 1 und 2 ausschnittsweise dargestellte Gegenstand ist Abschirmtransport- und/oder Abschirmlagerbehälter für radioaktive Gegenstände und/oder Substanzen, insbesondere für bestrahlte Kernreaktorbrennelemente.

In seinem grundsätzlichen Aufbau besteht der Abschirmtransport- und/oder Abschirmlagerbehälter aus einem Behältermantel 1 und einem Behälterboden, wobei der Behälterboden im allgemeinen an den Behältermantel angegossen ist und im Ausführungsbeispiel nicht dargestellt wurde. Zum grundsätzlichen Aufbau gehört fernerhin ein den Behälterinnenraum abschließendes Deckelaggregat aus mehreren Deckeln 2, 3.

Der Behältermantel 1 ist ein dickwandiges Bauteil aus Gußeisen, vorzugsweise aus Gußeisen mit Kugelgraphit. Eine Deckelaufnahme 4 ist vorgesehen, in die zumindest der behälterinnenraumseitige Deckel 2 des Deckelaggregates 2, 3 eingesetzt ist.

Man erkennt in der Fig. 1 durch unterschiedliche Schraffur, daß die Deckelaufnahme 4 in einem Stahlring 5 angeordnet ist, der mit einer Schweißverbindung 6 an den Behältermantel angeschweißt und/oder in diesen eingeschweißt ist. Das Ausführungsbeispiel zeigt die Ausführungsform, bei der der Stahlring 5 aufgeschweißt ist. Dazu ist der Stahlring 5 auf eine obere Stirnfläche des Behältermantels 1 aufgeschweißt worden. Man erkennt, daß der Stahlring 5 in bezug auf Außenumfang, Innenumfang und Wanddicke dem Behältermantel 1 angepaßt und mit einer flächigen Stumpfschweißverbindung 6 an den Behältermantel 1 angeschlossen ist. Die Fig. 2 zeigt eine Vergrößerung einer solchen Stumpfschweißverbindung 6, wie sie entsteht, wenn sie als aluminothermische Schweißverbindung hergestellt ist. - Die in dem Stahlring 5 ausgeformte Deckelaufnahme 4 ist für die Aufnahme eines behälterinnenraumseitigen Abschirmdeckels 2 und eines zusätzlichen äußeren Kontrolldeckels 3 ausgebildet. Ein Kontrollraum 7 ist zwischengeschaltet. Der Abschirmdeckel 2 ist mit dem Stahlring 5 verschraubt, Schrauben 8 wurden angedeutet. Es versteht sich, daß ein weiterer Deckel aufgeschweißt werden könnte. Es handelt sich bei dem Kontrolldeckel 3 und den gegebenenfalls zusätzlich aufgeschweißten Zusatzdeckel um Stahldeckel, so daß auf einfache Weise und sehr funktionssicher die Schweißverbindung 9 hergestellt werden kann.

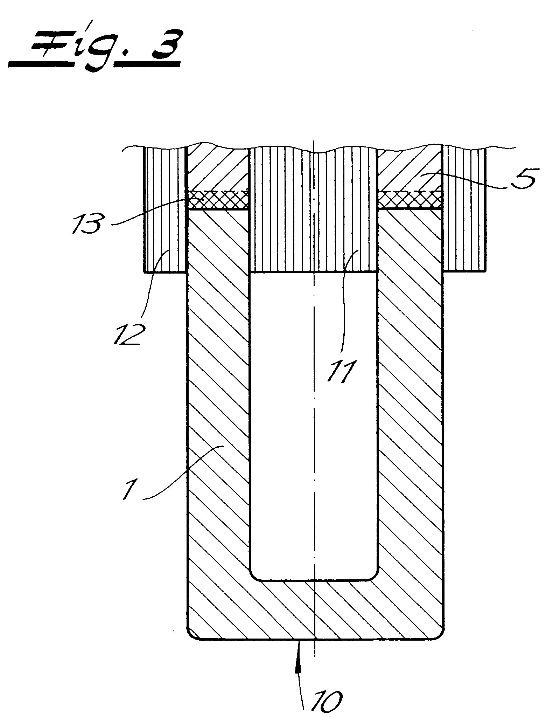

Die Fig. 3 verdeutlicht Maßnahmen eines Verfahrens zur Herstellung eines erfindungsgemäßen Abschirmtransport- und/oder Abschirmlagerbehälters. Man erkennt, daß zunächst der Behältermantel 1 mit dem angegossenen Behälterboden 10 aus Gußeisen hergestellt wurde. Die deckelaggregatseitige Stirnfläche des Behältermantels 1 wurde für die Schweißung vorbereitet, beispielsweise spanabhebend bearbeitet oder geschliffen. Der obere Rand des Behältermantels 1 ist innenseitig von einem kernförmigen Bauteil 11 ausgefüllt und außenseitig von einem Formmantel 12 umgeben. Das kernförmige Bauteil 11 und der Formmantel 12 überragen den Behältermantel 1. Auf die Stirnfläche des Behältermantels 1 ist eine aluminothermische Mischung 13 aufgebracht. Diese wird gezündet. Unter Ausnutzung der exothermen Wärmeenergie der aluminothermischen Umsetzung wird der Stahlring 5 an den Behältermantel angeschlossen. Dazu könnte auch die Stahlschmelze in den beschriebenen Raum zwischen Bauteil 11 und Formmantel 12 eingegossen werden. Dann wird die aluminothermische Verbindung gezündet.

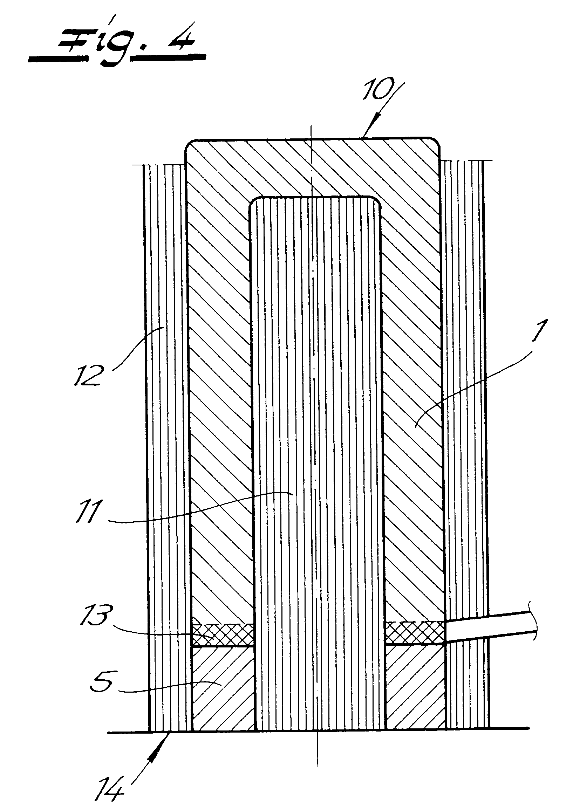

Die Fig. 4 zeigt demgegenüber gleichsam eine Umkehrung. Man erkennt, daß bei dieser Ausführungsform zunächst der Stahlring 5 in eine Gießform 14 für den Behältermantel 1 bzw. für den Behältermantel mit dem Behälterboden 10 eingelegt wurde, wobei es sich um einen Stahlring 5 handeln kann, der bearbeitet ist. Auf die dem Behältermantel 1 zugewandte Stirnfläche des Stahlringes 5 wird eine aluminothermische Mischung 13 aufgebracht. Danach wird das Gußeisen eingegossen. Mit der gießtechnischen Herstellung des Behältermantels 1, zumeist zusammen mit dem angegossenen Behälterboden 10, wird auch die Schweißverbindung 6 zwischen dem Stahlring 5 und dem Behältermantel 1 sicher hergestellt. Irgendwelche störenden Reste oder Einschlüsse aus der aluminothermischen Mischung 13 werden weder bei dem einen Verfahren noch bei dem anderen Verfahren beobachtet.

## Patentansprüche

1. Abschirmtransport und/oder Abschirmlagerbehälter für radioaktive Gegenstände und/oder Substanzen, insbesondere für bestrahlte Kernreaktorbrennelemente, mit
Behältermantel (1),
Behälterboden und
den Behälterinnenraum abschließendem Deckelaggregat (2, 3)
wobei der Behältermantel (1) als dickwandiges Bauteil aus Gußeisen, vorzugsweise aus Gußeisen mit Kugelgraphit, ausgeführt ist und deckelaggregatseitig eine Deckelaufnahme (4) aufweist, in die zumindest der behälterinnenraumseitige Deckel (2) des Deckelaggregates (2, 3) eingesetzt ist, und wobei die Deckelaufnahme (4) in einem mit dem Behältermantel (1) verbundenen Stahlring (5) angeordnet ist, **dadurch gekennzeichnet**, daß der Stahlring (5) mit einer aluminothermischen Schweißverbindung (6) an den Behältermantel (1) angeschweißt und/oder in diesem eingeschweißt ist.

2. Abschirmtransport- und/oder Abschirmlagerbehälter nach Anspruch 1, dadurch gekennzeichnet, daß der Stahlring (5) in eine Stahlringaufnahme des Behältermantels (1) eingeschweißt ist.

3. Abschirmtransport und/oder Abschirmlagerbehälter nach Anspruch 1, dadurch gekennzeichnet, daß der Stahlring (5) auf eine obere Stirnfläche des Behältermantels (1) aufgeschweißt ist.

4. Abschirmtransport- und/oder Abschirmlagerbehälter nach einem der Ansprüche 1 oder 3, dadurch gekennzeichnet, daß der Stahlring (5) in bezug auf Außenumfang, Innenumfang und Wanddicke dem Behältermantel (1) angepaßt und mit einer flächigen Stumpfschweißverbindung (6) an den Behältermantel (1) angeschlossen ist.

5. Abschirmtransport und/oder Abschirmlagerbehälter nach einem der Ansprüche 1 bis 4, dadurch gekennzeichnet, daß die in dem Stahlring (5) ausgeformte Deckelaufnahme (4) für die Aufnahme eines behälterinnenraumseitigen Abschirmdeckels (2) und eines zusätzlichen äußeren Kontrolldeckels (3) eingerichtet ist.

6. Abschirmtransport- und/oder Abschirmlagerbehälter nach Anspruch 5, dadurch gekennzeichnet, daß der Kontrolldeckel (3) als Stahldeckel ausgeführt und mit dem Stahlring (5) durch eine umlaufende Schweißnaht (9) verbunden ist,

7. Verfahren zur Herstellung eines Abschirmtransport- und/oder Abschirmlagerbehälters nach einem der Ansprüche 3 bis 6, bei dem zunächst der Behältermantel aus dem Gußeisen hergestellt und die deckelaggregatseitige Stirnfläche für die Schweißung vorbereitet wird, wobei der obere Rand des Behältermantels innenseitig von einem Kern und außenseitig von einem Formmantel umgeben wird, die den oberen Rand des Behältermantels überragen,
wobei auf die Stirnfläche des Behältermantels eine aluminothermische Mischung aufgebracht und diese gezündet wird,
und wobei unter Ausnutzung der exotherm freiwerdenden Wärmeenergie der aluminothermischen Umsetzung der Stahlring an den Behältermantel angeschlossen wird.

8. Verfahren zur Herstellung eines Abschirmtransport- und/oder Abschirmlagerbehälters nach Anspruch 7, dadurch gekennzeichnet, daß eine Stahlschmelze der Zusammensetzung des Stahlringes in den Zwischenraum zwischen dem Kern und dem Formmantel eingegossen wird.

9. Verfahren zur Herstellung eines Abschirmtransport- und/oder Abschirmbehälters nach einem der Ansprüche 3 bis 6, bei dem zunächst der Stahlring hergestellt und in eine Gießform für den Behältermantel eingelegt wird,
wobei auf die behältermantelseitige Stirnfläche des Stahlringes eine aluminothermische Mischung aufgebracht wird
und wobei danach die Gußeisenschmelze für den Behältermantel und gegebenenfalls den Behälterboden eingegossen wird.

## Claims

1. A shielded transport- and/or shielded storage container for radioactive objects and/or substances, particularly for irradiated nuclear reactor fuel elements, having
a container sidewall (1),
a container base and
a cover unit (2, 3) blanking off the interior space of the container,
wherein the container sidewall (1) is constructed as a thick-walled component of cast iron, preferably of cast iron with spheroidal graphite, and has a cover receiver (4) on the cover unit side, in which cover receiver at least the cover (2) is inserted which is on the container interior space side of the cover unit (2, 3), and wherein the cover receiver (4) is disposed in a steel ring (5) joined to the container sidewall (1), characterised in that the steel ring (5) is welded on to the container sidewall (1) and/or is welded into the latter with an aluminothermic weld joint (6).

2. A shielded transport- and/or shielded storage container according to claim 1, characterised in that the steel ring (5) is welded into a steel ring receiver of the container sidewall (1).

3. A shielded transport- and/or shielded storage container according to claim 1, characterised in that the steel ring (5) is welded on to an upper end face of the container sidewall (1).

4. A shielded transport- and/or shielded storage container according to any one of claims 1 to 3, characterised in that the steel ring (5) is matched to the container sidewall (1) as regards external circumference, internal circumference and wall thickness and is attached to the container sidewall (1) with a two-dimensional butt-weld joint (6).

5. A shielded transport- and/or shielded storage container according to any one of claims 1 to 4, characterised in that the cover receiver (4) formed in the steel ring (5) is designed for the receipt of a shielding cover (2) on the container interior space side and of an additional, outer control cover (3).

6. A shielded transport- and/or shielded storage container according to claim 5, characterised in that the control cover (3) is constructed as a steel cover and is joined to the steel ring (5) by an encircling weld seam (9).

7. A process for producing a shielded transport- and/or shielded storage container according to any one of claims 3 to 6, wherein the container sidewall is first manufactured from cast iron and the end face on the cover unit side is prepared for welding, wherein the top edge of the container sidewall is encircled on the inside by a core and on the outside by an exterior mould, which protrude above the top edge of the container sidewall,
wherein an aluminothermic mixture is applied to the end face of the container sidewall and is ignited,
and wherein the steel ring is attached to the container sidewall utilising the exothermically released heat energy of the aluminothermic reaction.

8. A process for producing a shielded transport- and/or shielded storage container according to claim 7, characterised in that a steel melt with the composition of the steel ring is cast into the intermediate space between the core and the exterior mould.

9. A process for producing a shielded transport- and/or shielded storage container according to any one of claims 3 to 6, wherein the steel ring is first manufactured and is placed in a casting mould for the container sidewall,
wherein an aluminothermic mixture is applied to the end face of the steel ring on the container sidewall side,
and wherein thereafter the cast iron melt for the container sidewall and optionally for the container base is cast in.

## Revendications

1. Conteneur de transport blindé et/ou conteneur de stockage blindé pour des objets et/ou substances radioactifs, en particulier pour des éléments combustibles de réacteurs nucléaires, comprenant une enveloppe de conteneur (1), un fond de conteneur et un ensemble de couvercle (2, 3) pour la fermeture de l'espace intérieur du conteneur, l'enveloppe (1) du conteneur étant réalisée sous la forme d'un élément de construction à paroi épaisse en fonte, de préférence en fonte à graphite sphéroïdal, et munie, du côté de l'ensemble de couvercle, d'un logement de couvercle (4) dans lequel est inséré au moins le couvercle (2) de l'ensemble de couvercle (2, 3), situé du côté de l'espace intérieur du conteneur, et le logement de couvercle (4) étant placé dans une bague en acier (5) solidarisée avec l'enveloppe (1) du conteneur, caractérisé en ce que la bague en acier (5) est soudée sur et/ou dans l'enveloppe (1) du conteneur au moyen d'un joint soudé aluminothermique (6).

2. Conteneur de transport blindé et/ou conteneur de stockage blindé selon la revendication 1, caractérisé en ce que la bague en acier (5) est soudée dans un logement de réception de bague en acier de l'enveloppe (1) du conteneur.

3. Conteneur de transport blindé et/ou conteneur de stockage blindé selon la revendication 1, caractérisé en ce que la bague en acier (5) est soudée sur la surface frontale supérieure de l'enveloppe (1) du conteneur.

4. Conteneur de transport blindé et/ou conteneur de stockage blindé selon l'une des revendications 1 ou 3, caractérisé en ce que, en ce qui concerne la périphérie extérieure, la périphérie intérieure et l'épaisseur de paroi, la bague en acier (5) est adaptée à l'enveloppe (1) du conteneur et rattachée à ladite enveloppe (1) du conteneur au moyen d'un joint soudé bout à bout plat (6).

5. Conteneur de transport blindé et/ou conteneur de stockage blindé selon l'une des revendications 1 à 4, caractérisé en ce que le logement de couvercle (4) formé dans la bague en acier (5) est agencé pour la réception d'un couvercle de blindage (2) situé du côté intérieur du conteneur, et d'un couvercle de contrôle (3) extérieur supplémentaire.

6. Conteneur de transport blindé et/ou conteneur de stockage blindé selon la revendication 5, caractérisé en ce que le couvercle de contrôle (3) est réalisé par un couvercle en acier et rattaché à la bague en acier (5) par un cordon de soudure (9) continu.

7. Procédé de fabrication d'un conteneur de transport blindé et/ou d'un conteneur de stockage blindé selon l'une des revendications 3 à 6, dans lequel l'enveloppe du conteneur est tout d'abord réalisée à partir de la fonte, avec préparation pour le soudage de la surface frontale située du côté de l'ensemble de couvercle, le bord supérieur de l'enveloppe du conteneur étant entouré intérieurement par un noyau et extérieurement par un surmoule, tous deux dépassant du bord supérieur de l'enveloppe du conteneur, un mélange aluminothermique étant appliqué et enflammé sur la surface frontale de l'enveloppe du conteneur, et la bague en acier étant solidarisée avec l'enveloppe du conteneur en mettant à profit l'énergie thermique de la transformation aluminothermique libérée de manière exothermique.

8. Procédé de fabrication d'un conteneur de transport blindé et/ou d'un conteneur de stockage blindé selon la revendication 7, caractérisé en ce que de l'acier en fusion ayant la composition de la bague en acier est coulé dans l'espace entre le noyau et le surmoule.

9. Procédé de fabrication d'un conteneur de transport blindé et/ou d'un conteneur de stockage blindé selon l'une des revendications 3 à 6, dans lequel la bague en acier est réalisée en premier et placée dans un moule pour l'enveloppe du conteneur, un mélange aluminothermique étant appliqué sur la surface frontale de la bague en acier située du côté enveloppe du conteneur, et la fonte en fusion étant ensuite coulée pour l'enveloppe et le cas échéant pour le fond du conteneur.
